# EUROPÄISCHE PATENTSCHRIFT

(11) **EP 1 443 186 B1**
(45) Veröffentlichungstag und Bekanntmachung des Hinweises auf die Patenterteilung: **21.12.2005**
(21) Anmeldenummer: 04001668.5
(22) Anmeldetag: 27.01.2004
(51) Int. Cl.: F01N 3/02, F01N 3/04, F01N 5/02, B60H 1/02, F28F 27/02

(54) **Baugruppe bestehend aus Abgas-Wärmetauscher und Bypass**
Assembly comprising an exhaust gas heat exchanger and bypass
Ensemble composé d'un échangeur de chaleur de gaz d'échappement et dérivation

(30) Priorität: 31.01.2003 DE 10303910
(43) Veröffentlichungstag der Anmeldung: 04.08.2004
(73) Patentinhaber: Arvin Technologies, Inc., Troy, MI 48084-7186 (US)
(72) Erfinder: Bush, Phillip David, Dr., Lea Preston PR2 1 RB (GB); Thèvenon, Richard, 89250 Beaumont (FR)
(74) Vertreter: Sties, Jochen

(56) Entgegenhaltungen:
- WO-A-01/50047
- CA-A- 2 273 698
- DE-U- 29 611 034
- DE-U- 29 714 478
- US-A- 6 141 961
- US-A1- 2003 015 184

## Beschreibung

Die Erfindung betrifft eine Baugruppe bestehend aus Abgas-Wärmetauscher und Bypass, mit einem Einlaßkrümmer, einem Auslaßkrümmer, einem Kanal für einen Wärmetauscher und einem Bypass-Kanal, wobei sich der Wärmetauscher-Kanal und der Bypass-Kanal parallelgeschaltet zwischen dem Einlaßkrümmer und dem Auslaßkrümmer erstrecken und mit diesem strömungsdicht verbunden sind, wobei im Inneren des Wärmetauscher-Kanals ein Wärmetauscher angeordnet ist. Eines solche Baugruppe ist insbesondere für einen sogenannten Zuheizer geeignet.

Ein Zuheizer wird bei Kraftfahrzeugen mit modernen, sparsamen Verbrennungsmotoren verwendet. Diese Motoren produzieren aufgrund ihres hohen Wirkungsgrades nur noch sehr wenig Abwärme, die für das Heizsystem des Kraftfahrzeugs zur Verfügung steht. Die daraus resultierende geringe Heizleistung wird von Fahrzeuginsassen häufig als unkomfortabel empfunden. Daher sind Systeme entwickelt worden, die einen Wärmetauscher im Abgasstrang des Fahrzeugs enthalten. Auf diese Weise kann dem Abgasstrom Wärme entzogen werden, die zum Heizen des Innenraumes des Fahrzeugs verwendet wird.

Ein solches System weist üblicherweise parallel zu dem durch den Wärmetauscher führenden Strömungsweg einen Bypass auf. Auf diese Weise kann der Wärmetauscher abgeschaltet werden. Dies ist beispielsweise vorteilhaft, wenn unmittelbar nach dem Anlassen des Verbrennungsmotors ein im Abgasstrang angeordneter Katalysator auf seine Betriebstemperatur gebracht werden soll. Dies würde verzögert, wenn das Abgas durch den Wärmetauscher strömt, der eine sehr große Wärmekapazität hat.

Bei allen Wärmetauschern im Abgasstrang eines Fahrzeugs stellen sich Probleme, die aus der Wärmedehnung der verschiedenen Bauteile resultieren. Zum einen sind die Bauteile Temperaturunterschieden von mehreren hundert Grad Celsius ausgesetzt. Zum anderen ergibt sich selbst bei einem konstanten Betriebszustand ein starkes Temperaturgefälle zwischen den verschiedenen Bauteilen. Die unterschiedlichen Wärmedehnungen müssen über eine Vielzahl von Betriebszyklen sicher aufgenommen werden, wobei kein Leck im Abgasstrang auftreten darf.

Aus der CA-A-2 273 698 ist eine Baugruppe der eingangs genannten Art bekannt. Bei dieser ist kein in sich geschlossener Wärmetauscher im Inneren des Wärmetauscher-Kanals angeordnet, sondern lediglich eine einfache Rohrspirale, die auf allen Seiten vom Abgas umströmt werden kann, das durch den Wärmetauscher-Kanal strömt. Aufgrund der Elastizität der Rohrspirale können keine Probleme mit Wärmedehnungen auftreten.

Die Aufgabe der Erfindung besteht darin, ein Gehäuse für einen Wärmetauscher zu schaffen, das konstruktiv einfach aufgebaut ist, so daß es kostengünstig hergestellt werden kann, während gleichzeitig die unterschiedlichen Wärmeausdehnungen der verschiedenen Bauteile ermöglicht werden.

Zu diesem Zweck ist erfindungsgemäß bei einer Baugruppe der eingangs genannten Art vorgesehen, daß die Einlaßseite des Wärmetauschers strömungsdicht mit dem Wärmetauscher-Kanal verbunden ist und die Auslaßseite des Wärmetauschers verschiebbar im Wärmetauscher-Kanal aufgenommen ist, so daß eine Wärmeausdehnung des Wärmetauschers relativ zum Wärmetauscher-Kanal möglich ist. Die erfindungsgemäße Baugruppe beruht auf dem Grundgedanken, einen geschlossenen Kanal für den Abgas-Wärmetauscher vorzusehen. Der Wärmetauscher ist in diesem Kanal an seiner Einlaßseite fest und strömungsdicht angebracht, beispielsweise verschweißt. Auf seiner Auslaßseite ist der Wärmetauscher frei verschiebbar im Wärmetauscher-Kanal aufgenommen. Auf diese Weise kann sich der Wärmetauscher frei im Inneren des Wärmetauscher-Kanals ausdehnen, und Verspannungen aufgrund von unterschiedlichen Wärmeausdehnungen der Bauteile können nicht auftreten. Der außenliegende Kanal sorgt für die notwendige mechanische Stabilität und Dichtigkeit des Abgasstrangs.

Gemäß einer bevorzugten Ausführungsform der Erfindung bestehen der Einlaßkrümmer und der Auslaßkrümmer aus tiefgezogenem oder fließgepreßtem Stahlblech, und sie sind identisch miteinander ausgeführt. Dies führt zu besonders geringen Herstellkosten.

Gemäß der bevorzugten Ausführungsform der Erfindung ist vorgesehen, daß zwischen dem Auslaßkrümmer einerseits und dem Bypass-Kanal sowie dem Wärmetauscher-Kanal andererseits ein Auslaßadapter vorgesehen ist. Dieser besteht vorzugsweise aus tiefgezogenem Stahlblech und ist mit dem Auslaßkrümmer verschweißt. Die Verwendung eines Auslaßadapters führt zu vielen Vorteilen bei der Herstellung der Baugruppe. Zum einen können auf diese Weise mit geringem Aufwand die Anschlüsse für den Bypass-Kanal und den Wärmetauscher-Kanal an den Auslaßkrümmer erhalten werden. Ein Auslaßkrümmer, bei dem die Anschlüsse für den Bypass-Kanal sowie den Wärmetauscher-Kanal einstückig ausgebildet wären, wäre nur mit sehr hohem Aufwand herstellbar. Zum anderen ergeben sich Vorteile bei der Montage. Der Auslaßadapter kann mit dem Bypass-Kanal und dem Wärmetauscher-Kanal verschweißt werden, bevor der Auslaßkrümmer aufgesetzt ist. Die entsprechenden Schweißstellen sind somit gut zugänglich, selbst zwischen den beiden Kanälen. Anschließend kann der Auslaßkrümmer auf den Auslaßadapter aufgesetzt und mit diesem verschweißt werden. In diesem Fall ist nur eine umlaufende und außenliegende, also gut erreichbare Schweißnaht auszuführen.

Vorzugsweise ist ein Einlaßadapter vorgesehen, der zwischen dem Einlaßkrümmer einerseits und dem Bypass-Kanal und dem Wärmetauscher-Kanal andererseits angeordnet ist. Der Einlaßadapter ist vorzugsweise ein Metallgußteil, in das ein Klappenventil integriert ist. Das Klappenventil dient dazu, den Abgasstrom in Abhängigkeit von äußeren Parametern zwischen den beiden Kanälen aufzuteilen. Dabei ist jede beliebige Aufteilung des Volumenstroms zwischen den beiden Kanälen möglich. Der Einlaßadapter bietet den Vorteil, daß alle in der Herstellung aufwendigen Schritte in ein einziges Bauteil integriert sind. Der Einlaßadapter nimmt das Ventil auf, bildet die Ventilsitze für die Ventilklappe und ermöglicht ähnlich wie der Auslaßadapter eine einfache Montage der gesamten Baugruppe.

Gemäß der bevorzugten Ausführungsform der Erfindung ist vorgesehen, daß der Wärmetauscher-Kanal aus einem Einlaßkonus, einem geraden Wärmetauscher-Rohr und einem Auslaßkonus besteht. Der Wärmetauscher ist an seiner Einlaßseite mit dem Einlaßkonus verschweißt, während die Auslaßseite des Wärmetauschers verschiebbar im Auslaßkonus aufgenommen ist. Das Wärmetauscher-Rohr ist sowohl mit dem Einlaßkonus als auch dem Auslaßkonus verschweißt. Das radiale Spiel zwischen der Auslaßseite des Wärmetauschers und dem Auslaßkonus beträgt in der Größenordnung von 0,2 mm. Dies ermöglicht die Wärmeausdehnung des Wärmetauschers in jeder Richtung, während gleichzeitig ein sehr kleiner Strömungsquerschnitt gebildet ist, der eine Rückströmung des Abgases in den Raum zwischen dem Wärmetauscher-Rohr und dem Wärmetauscher verhindert.

Zum Anschließen des Wärmetauschers ist dieser vorzugsweise mit zwei Anschlußstutzen versehen, die sich radial nach außen durch das Wärmetauscher-Rohr hindurch erstrecken. Das Wärmetauscher-Rohr ist zu diesem Zweck mit zwei Löchern versehen, die als Langlöcher ausgeführt sind. Auch dies dient der ungehinderten Wärmeausdehnung des Wärmetauschers.

Zwischen der Innenseite des Wärmetauscher-Rohres und der Außenseite des Wärmetauschers ist ein ringförmiger Spalt vorgesehen. In diesem ist eine Packung aus wärmeisolierendem Fasermaterial angeordnet. Das Material dient zur Wärmeisolierung des Wärmetauschers, so daß Verluste durch Wärmeabstrahlung nach außen reduziert sind. Gleichzeitig ist das wärmeisolierende Material zwischen dem Wärmetauscher und dem Wärmetauscher-Rohr derart komprimiert gehalten, daß es als Abdichtung wirkt. Dies verhindert eine Leckströmung von der Auslaßseite des Wärmetauschers durch den Spalt zwischen dem Auslaßkonus und dem Wärmetauscher in den Ringraum zwischen dem Wärmetauscher und dem Wärmetauscher-Rohr und durch die Langlöcher nach außen. Aufgrund eines Venturi-Effekts im Bereich der Auslaßseite des Wärmetauschers ist eine Leckströmung hin zu den Langlöchern im Wärmetauscher-Rohr aber ohnehin nicht oder nur in sehr geringem Umfang zu erwarten; es ist eher wahrscheinlich, daß in diesem Bereich Außenluft angesaugt wird.

Gemäß einer Weiterbildung der Erfindung kann vorgesehen sein, daß zwischen der Auslaßseite des Wärmetauschers und dem Auslaßkonus eine Schiebedichtung angeordnet ist, die jegliche Leckströmung hin zu den Langlöchern im Rohr zuverlässig verhindert.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine Seitenansicht einer erfindungsgemäßen Baugruppe;
- Figur 2 eine Draufsicht auf die erfindungsgemäße Baugruppe;
- Figur 3 eine Schnittansicht entlang der Ebene III-III von Figur 1;
- Figur 4 die Schnittansicht von Figur 3 in vergrößertem Maßstab;
- Figur 5 einen Schnitt entlang der Ebene V-V von Figur 4;
- Figur 6 einen Schnitt entlang der Ebene VI-VI von Figur 4;
- Figur 7 einen Schnitt entlang der Ebene VII-VII von Figur 4;
- Figur 8 einen Schnitt entlang der Ebene VIII-VIII von Figur 4;
- Figur 9 einen Schnitt entlang der Ebene IX-IX von Figur 4;
- Figur 10 eine abgebrochene Ansicht entsprechend derjenigen von Figur 9, wobei eine Ausführungsvariante gezeigt ist; und
- Figur 11 eine Draufsicht auf die Auslaßseite des Wärmetauscher-Kanals.

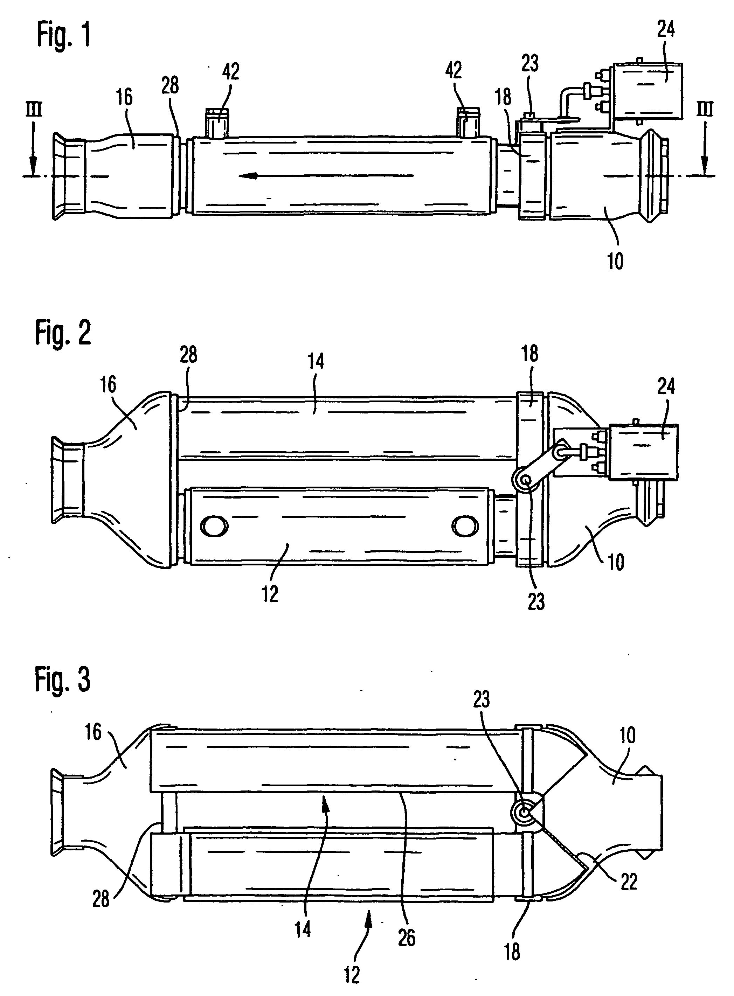

In den Figuren 1 bis 3 ist eine Baugruppe mit einem Abgas-Wärmetauscher und einem Bypass gezeigt. Sie ist dafür vorgesehen, im Abgasstrang eines Fahrzeugs angeordnet zu werden, wobei sie in der Richtung des Pfeils von Figur 1 durchströmt wird, also bezüglich Figur 1 von rechts nach links.

Die Baugruppe weist einen Einlaßkrümmer 10 auf, der aus tiefgezogenem oder fließgepreßtem Stahlblech besteht. Der Einlaßkrümmer ermöglicht grundsätzlich, den Abgasstrom zwischen einem Wärmetauscher-Kanal 12 und einem Bypass-Kanal 14 aufzuteilen. Der Wärmetauscher-Kanal und der Bypass-Kanal werden stromabwärts von einem Auslaßkrümmer 16 wieder zusammengefaßt. Der Auslaßkrümmer ist identisch mit dem Einlaßkrümmer 10 ausgebildet.

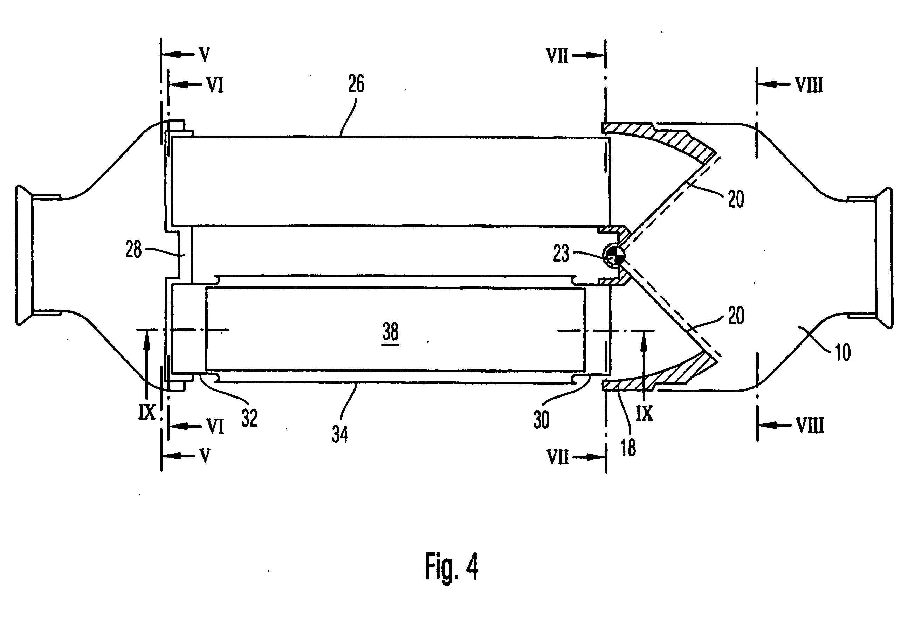

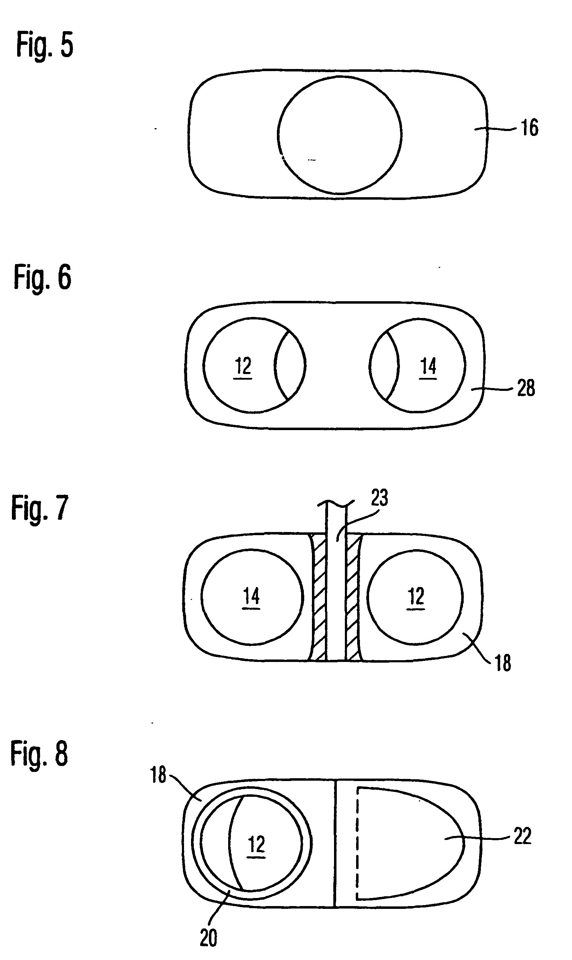

Auf der Auslaßseite des Einlaßkrümmers 10 ist ein Einlaßadapter 18 (siehe auch die Figuren 4, 7 und 8) angeordnet. Der Einlaßadapter ist ein Metallgußteil und weist zwei Ventilsitze 20 auf, mit denen eine Ventilklappe 22 zusammenwirken kann. Die Ventilklappe 22 ist mittels einer Ventilwelle 23 gelagert, die mit einem Stellmotor 24 verbunden ist. Wenn die Ventilklappe beispielsweise an dem Ventilsitz anliegt, der dem Wärmetauscher-Kanal 12 zugeordnet ist, strömt der gesamte Abgasstrom durch den Bypass-Kanal 14. Es sind beliebige Zwischenstellungen der Ventilklappe 22 möglich, um den Abgasstrom in einem jeweils gewünschten Verhältnis zwischen den beiden Kanälen aufzuteilen. Der Einlaßadapter 18 ist mit dem Einlaßkrümmer 10 verschweißt.

Der Bypass-Kanal 14 besteht aus einem Bypass-Rohr 26, das auf seiner Einlaßseite mit dem Einlaßadapter 18 verschweißt ist. Auf seiner Auslaßseite ist das Bypass-Rohr 26 mit einem Auslaß-Adapter 28 verschweißt. Der Auslaß-adapter 28 ist ein gestanztes und tiefgezogenes Blechteil, das den Übergang von den beiden kreisförmigen Querschnitten des Wärmetauscher-Kanals 12 und des Bypass-Kanals 14 auf den langgestreckten Einlaßquerschnitt des Auslaßkrümmers bildet. Der Auslaßadapter 28 ist mit dem Auslaßkrümmer 16 verschweißt.

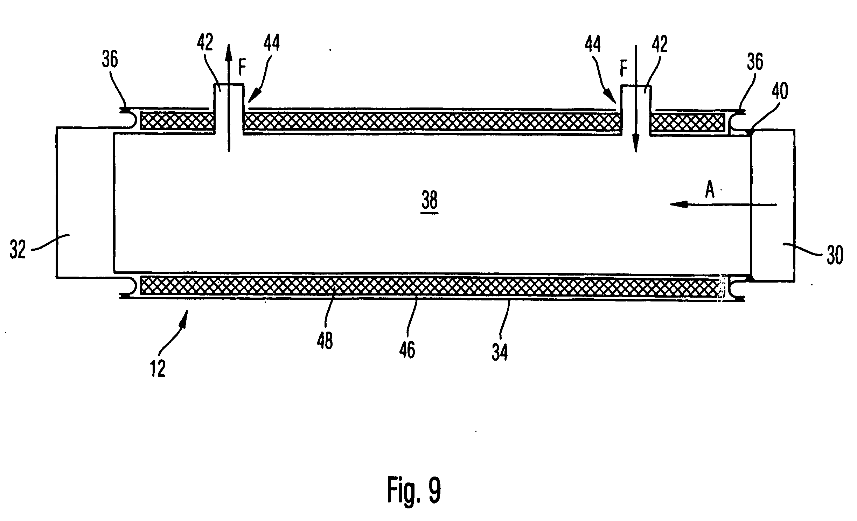

Der Wärmetauscher-Kanal 12 besteht aus einem Einlaßkonus 30, einem Auslaßkonus 32 und einem Wärmetauscher-Rohr 34 (siehe insbesondere Figur 9). Das Wärmetauscher-Rohr 34 ist mit dem Einlaßkonus 30 und dem Auslaßkonus 32 verschweißt, was hier durch Schweißnähte 36 symbolisiert ist.

Im Inneren des durch den Einlaßkonus 30, das Wärmetauscher-Rohr 34 und den Auslaßkonus 32 gebildeten Wärmetauscher-Kanals 12 ist ein Wärmetauscher 38 angeordnet, der zum einen in der Richtung des Pfeils A vom Abgas durchströmt werden kann und zum anderen, symbolisiert durch die beiden Pfeile F, von einem Fluid, um eine Wärmeübertragung vom Abgas zum Fluid zu erzielen. Der Innenaufbau des Wärmetauschers 38 ist für das Verständnis der Erfindung ohne Bedeutung, so daß er hier nicht weiter erläutert wird. Die Außenhülle des Wärmetauschers besteht aus Metall.

Der Wärmetauscher 38 ist auf seiner Einlaßseite mit dem Einlaßkonus 30 verschweißt. Dies wird hier symbolisiert durch eine Schweißnaht 40. Auf seiner Auslaßseite ist der Wärmetauscher 38 mit einem geringfügigen radialen Spiel lose in den Auslaßkonus 32 eingesetzt. Sofern sich der Wärmetauscher 38 und das Wärmetauscher-Rohr 34 bei Temperaturunterschieden unterschiedlich ausdehnen, sind Verspannungen zwischen dem Wärmetauscher 38 und dem Wärmetauscher-Rohr 34 verhindert, da sich die Auslaßseite des Wärmetauschers 38 frei im Auslaßkonus 32 verschieben kann. Die Anordnung des Wärmetauschers ist vergleichbar mit einer Brückenlagerung, bei der ein Festlager und ein Loslager vorgesehen sind. Das Festlager dient zur Positionierung, und das Loslager ermöglicht die von Wärmeausdehnungen resultierenden Relativverschiebungen. Dabei ist es grundsätzlich natürlich möglich, den Wärmetauscher auf andere Weise als durch eine Schweißnaht im Wärmetauscher-Kanal festzulegen.

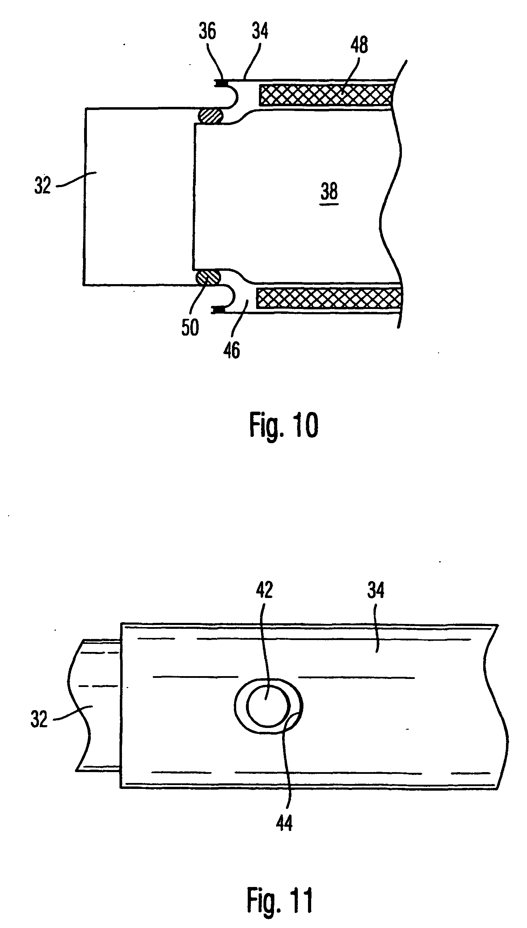

Der Wärmetauscher 38 ist mit zwei Anschlußstutzen 42 versehen, durch die Fluid zum Wärmetauscher 38 zugeführt bzw. von diesem abgeführt werden kann. Die beiden Anschlußstutzen 42 erstrecken sich durch das Wärmetauscher-Rohr 34 hindurch, wobei zu diesem Zweck jeweils ein Langloch 44 (siehe Figur 11) vorgesehen ist. Die Langlöcher 44 sind so dimensioniert, daß die Wärmeausdehnungen des Wärmetauschers 38 nicht behindert werden.

Zwischen der Außenseite des Wärmetauschers 38 und der Innenseite des Wärmetauscher-Rohres 34 ist ein Ringspalt 46 gebildet. In diesem Ringspalt ist eine Packung oder Matte 48 angeordnet, die aus wärmeisolierendem Fasermaterial besteht. Die Matte 48 dient zur Wärmeisolierung des Wärmetauschers 38. Ferner verhindert sie Klappergeräusche, die der Wärmetauscher 38 im Auslaßkonus 32 erzeugen könnte.

Das Volumen der wärmeisolierenden Matte 48 ist in bezug auf den Querschnitt des Ringspaltes 46 so abgestimmt, daß die Matte 48 erheblich komprimiert wird. Auf diese Weise verringert sich ihre Gasdurchlässigkeit derart, daß sie eine Abdichtung gegen einen potentiellen Leckstrom bildet, der von der Auslaßseite des Wärmetauschers 38 durch den Ringspalt zwischen dem Wärmetauscher und dem Auslaßkonus 32 in den Ringspalt 46 und von dort durch die Langlöcher 44 ins Freie gelangen könnte.

In Figur 10 ist eine Weiterbildung der erfindungsgemäßen Baugruppe gezeigt. Bei dieser ist zur Verbesserung der Dichtigkeit der Abgasanlage ein Dichtring 50 vorgesehen, der zwischen der Auslaßseite des Wärmetauschers 38 und dem Auslaßkonus 32 angeordnet ist. Der Dichtring 50 ist so gewählt, daß er einerseits jeglichen Leckstrom hin zum Ringspalt 46 und durch die Langlöcher 44 ins Freie verhindert, andererseits weiterhin die axiale Ausdehnung des Wärmetauschers 38 und die daraus resultierende Relativverschiebung gegenüber dem Auslaßkonus 32 ermöglicht.

Der besondere Vorteil der erfindungsgemäßen Baugruppe besteht zum einen darin, daß sie zum einen einen sehr einfachen Aufbau und daraus resultierend geringe Herstellungskosten aufweist. Das Bypass-Rohr 26 und das Wärmetauscher-Rohr 34 sind einfache, gerade Rohrstücke, die als Standardteile zur Verfügung stehen. Der Einlaßkrümmer 10 und der Auslaßkrümmer 16 können kostengünstig fließgepreßt werden. Außerdem sind sie identisch, was zu niedrigen Stückkosten führt. Alle konstruktiven Details, die zu einem hohen Herstellungsaufwand führen, sind in einem einzigen Bauteil vereint, nämlich im Einlaßadapter 18. Dieser gewährleistet zum einen die Querschnittsanpassung vom Querschnitt des Einlaßkrümmers 10 auf die Querschnitte des Wärmetauscher-Kanals 12 und des Bypass-Kanals 14. Zum anderen nimmt der Einlaßadapter 18 das Klappenventil auf, mit dem die Strömungsverteilung durch die beiden Kanäle geregelt werden kann. Die erfindungsgemäße Baugruppe zeichnet sich außerdem durch die vorteilhafte Anbringung des Wärmetauschers im Inneren des Wärmetauscher-Kanals 12 aus, durch die Wärmespannungen vermieden werden. In Kombination ergeben sich geringe Herstellungskosten bei optimaler Beherrschung des unterschiedlichen Wärmeausdehnungsverhaltens der verschiedenen Bauteile.

### Bezugszeichenliste

- 10:: Einlaßkrümmer
- 12:: Wärmetauscher-Kanal
- 14:: Bypass-Kanal
- 16:: Auslaßkrümmer
- 18:: Einlaßadapter
- 20:: Ventilsitz
- 22:: Ventilklappe
- 23:: Ventilwelle
- 24:: Stellmotor
- 26:: Bypass-Rohr
- 28:: Auslaßadapter
- 30:: Einlaßkonus
- 32:: Auslaßkonus
- 34:: Wärmetauscher-Rohr
- 36:: Schweißnaht
- 38:: Wärmetauscher
- 40:: Schweißnaht
- 42:: Anschlußstutzen
- 44:: Langloch
- 46:: Ringspalt
- 48:: wärmeisolierende Matte
- 50:: Dichtung

## Patentansprüche

1. Baugruppe bestehend aus Abgas-Wärmetauscher und Bypass, mit einem Einlaßkrümmer (10), einem Auslaßkrümmer (16), einem Kanal (12) für einen Wärmetauscher (38) und einem Bypass-Kanal (14), wobei sich der Wärmetauscher-Kanal (12) und der Bypass-Kanal (14) parallelgeschaltet zwischen dem Einlaßkrümmer (10) und dem Auslaßkrümmer (16) erstrecken und mit diesem strömungsdicht verbunden sind, wobei im Inneren des Wärmetauscher-Kanals (12) ein Wärmetauscher (38) angeordnet ist, **dadurch gekennzeichnet, daß** die Einlaßseite des Wärmetauschers strömungsdicht mit dem Wärmetauscher-Kanal (12) verbunden ist und die Auslaßseite des Wärmetauschers (38) verschiebbar im Wärmetauscher-Kanal (12) aufgenommen ist, so daß eine Wärmeausdehnung des Wärmetauschers (38) relativ zum Wärmetauscher-Kanal (12) möglich ist.

2. Baugruppe nach Anspruch 1, **dadurch gekennzeichnet, daß** zwischen dem Auslaßkrümmer (16) einerseits und dem Wärmetauscher-Kanal (12) und dem Bypass-Kanal (14) andererseits ein Auslaßadapter (28) angeordnet ist.

3. Baugruppe nach Anspruch 2, **dadurch gekennzeichnet, daß** der Auslaß-adapter (28) aus tiefgezogenem Stahlblech besteht.

4. Baugruppe nach Anspruch 3, **dadurch gekennzeichnet, daß** der Auslaß-adapter (28) mit dem Auslaßkrümmer (16) verschweißt ist.

5. Baugruppe nach einem der vorhergehenden Ansprüche, **dadurch gekennzeichnet, daß** zwischen dem Einlaßkrümmer (10) einerseits und dem Wärmetauscher-Kanal (12) und dem Bypass-Kanal (14) andererseits ein Einlaßadapter (18) angeordnet ist.

6. Baugruppe nach Anspruch 5, **dadurch gekennzeichnet, daß** der Einlaßadapter (18) ein Metallgußteil ist.

7. Baugruppe nach Anspruch 6, **dadurch gekennzeichnet, daß** der Einlaßadapter (18) mit dem Einlaßkrümmer (10) verschweißt ist.

8. Baugruppe nach einem der Ansprüche 5 bis 7, **dadurch gekennzeichnet, daß** im Einlaßadapter (18) schwenkbar eine Ventilklappe (22) angebracht ist, wobei der Einlaßadapter (18) zwei Ventilsitze (20) aufweist, mit denen die Ventilklappe (22) zusammenwirkt und die dem Wärmetauscher-Kanal (12) bzw. dem Bypass-Kanal (14) zugeordnet sind.

9. Baugruppe nach einem der vorhergehenden Ansprüche, **dadurch gekennzeichnet, daß** der Wärmetauscher-Kanal (12) aus einem Einlaßkonus (30), einem Wärmetauscher-Rohr (34) und einem Auslaßkonus (32) besteht, wobei das Wärmetauscher-Rohr (34) strömungsdicht mit dem Einlaßkonus (30) und dem Auslaßkonus (32) verbunden ist.

10. Baugruppe nach Anspruch 9, **dadurch gekennzeichnet, daß** das Wärmetauscher-Rohr (34) mit dem Einlaßkonus (30) und dem Auslaßkonus (32) verschweißt ist.

11. Baugruppe nach Anspruch 9 oder Anspruch 10, **dadurch gekennzeichnet, daß** die Einlaßseite des Wärmetauschers (38) mit dem Einlaßkonus (30) verschweißt ist.

12. Baugruppe nach einem der Ansprüche 9 bis 11, **dadurch gekennzeichnet, daß** die Auslaßseite des Wärmetauschers (38) verschiebbar im Auslaßkonus (32) aufgenommen ist.

13. Baugruppe nach Anspruch 12, **dadurch gekennzeichnet, daß** zwischen dem Auslaßkonus (32) und der Auslaßseite des Wärmetauschers (38) ein radiales Spiel in der Größenordnung von 0,2 mm vorliegt.

14. Baugruppe nach einem der Ansprüche 9 bis 13, **dadurch gekennzeichnet, daß** der Wärmetauscher (38) zwei Anschlußstutzen (42) aufweist, wobei das Wärmetauscher-Rohr (34) zwei Löcher (44) aufweist, durch die sich die Anschlußstutzen (42) erstrecken.

15. Baugruppe nach Anspruch 14, **dadurch gekennzeichnet, daß** die Löcher Langlöcher (44) sind.

16. Baugruppe nach einem der Ansprüche 9 bis 15, **dadurch gekennzeichnet, daß** zwischen der Außenseite des Wärmetauschers (38) und der Innenseite des Wärmetauscher-Rohres (34) ein Ringspalt (46) vorliegt, in welchem eine wärmeisolierende Matte (48) angeordnet ist.

17. Baugruppe nach Anspruch 16, **dadurch gekennzeichnet, daß** die wärmeisolierende Matte (48) aus einem Fasermaterial besteht.

18. Baugruppe nach einem der Ansprüche 16 und 17, **dadurch gekennzeichnet, daß** die wärmeisolierende Matte (48) zwischen dem Wärmetauscher-Rohr (34) und dem Wärmetauscher (38) komprimiert ist, so daß sie eine Abdichtung gegen einen Leckstrom von der Auslaßseite des Wärmetauschers (38) in den Ringspalt (46) bildet.

19. Baugruppe nach einem der vorhergehenden Ansprüche, **dadurch gekennzeichnet, daß** zwischen der Auslaßseite des Wärmetauschers (38) und dem Wärmetauscher-Kanal (12) eine Dichtung (50) angeordnet ist.

20. Baugruppe nach einem der vorhergehenden Ansprüche, **dadurch gekennzeichnet, daß** der Einlaßkrümmer (10) und der Auslaßkrümmer (16) aus tiefgezogenem oder fließgepreßtem Stahlblech bestehen.

21. Baugruppe nach einem der vorhergehenden Ansprüche, **dadurch gekennzeichnet, daß** der Einlaßkrümmer (10) und der Auslaßkrümmer (16) identisch sind.

22. Baugruppe nach einem der vorhergehenden Ansprüche, **dadurch gekennzeichnet, daß** der Bypass-Kanal (14) und der Wärmetauscher-Kanal (12) sich geradlinig erstrecken.

## Claims

1. An assembly consisting of an exhaust-gas heat exchanger and a bypass, having an intake manifold (10), an outlet manifold (16), a duct (12) for a heat exchanger (38), and a bypass duct (14), the heat exchanger duct (12) and the bypass duct (14) running in parallel connection between the intake manifold (10) and the outlet manifold (16) and being sealingly connected with these, in the interior of the heat exchanger duct (12) a heat exchanger (38) being arranged, **characterized in that** the intake side of the heat exchanger is sealingly connected to the heat exchanger duct (12), and the outlet side of the heat exchanger (38) is movably received in the heat exchanger duct (12), so that a thermal expansion of the heat exchanger (38) is possible relative to the heat exchanger duct (12).

2. The assembly according to claim 1, **characterised in that** an outlet adapter (28) is arranged between the outlet manifold (16), on the one hand, and the heat exchanger duct (12) and the bypass duct (14), on the other hand.

3. The assembly according to claim 2, **characterised in that** the outlet adapter (28) is made of deep-drawn sheet steel.

4. The assembly according to claim 3, **characterised in that** the outlet adapter (28) is welded to the outlet manifold (16).

5. The assembly according to any of the preceding claims, **characterised in that** an intake adapter (18) is arranged between the intake manifold (10), on the one hand, and the heat exchanger duct (12) and the bypass duct (14), on the other hand.

6. The assembly according to claim 5, **characterised in that** the intake adapter (18) is a cast metal part.

7. The assembly according to claim 6, **characterised in that** the intake adapter (18) is welded to the intake manifold (10).

8. The assembly according to any one of the claims 5 to 7, **characterised in that** a valve flap (22) is arranged in the intake adapter (18) so as to be able to swivel, the intake adapter (18) having two valve seats (20), with which the valve flap (22) cooperates and which are assigned to the heat exchanger duct (12) and the bypass duct (14), respectively.

9. The assembly according to any one of the preceding claims, **characterised in that** the heat exchanger duct (12) is made up of an intake cone (30), a heat exchanger tube (34) and an outlet cone (32), the heat exchanger tube (34) being sealingly connected to the intake cone (30) and the outlet cone (32).

10. The assembly according to claim 9, **characterised in that** the heat exchanger tube (34) is welded to the intake cone (30) and the outlet cone (32).

11. The assembly according to claim 9 or claim 10, **characterised in that** the intake side of the heat exchanger (38) is welded to the intake cone (30).

12. The assembly according to any one of the claims 9 to 11, **characterised in that** the outlet side of the heat exchanger (38) is movably received in the outlet cone (32).

13. The assembly according to claim 12, **characterised in that** between the outlet cone (32) and the outlet side of the heat exchanger (38) there is radial play in the order of magnitude of 0.2 mm.

14. The assembly according to any one of the claims 9 to 13, **characterised in that** the heat exchanger (38) has two connecting pieces (42), the heat exchanger tube (34) having two holes (44), through which the connecting pieces (42) extend.

15. The assembly according to claim 14, **characterised in that** the holes are oblong holes (44).

16. The assembly according to any one of the claims 9 to 15, **characterised in that** between the exterior side of the heat exchanger (38) and the interior side of the heat exchanger tube (34) there is an annular gap (46), in which a thermally insulating mat (48) is arranged.

17. The assembly according to claim 16, **characterised in that** the thermally insulating mat (48) is made of a fibrous material.

18. The assembly according to any one of the claims 16 and 17, **characterised in that** the thermally insulating mat (48) is compressed between the heat exchanger tube (34) and the heat exchanger (38), so that it forms a seal against a leakage flow from the outlet side of the heat exchanger (38) into the annular gap (46).

19. The assembly according to any one of the preceding claims, **characterised in that** a seal (50) is arranged between the outlet side of the heat exchanger (38) and the heat exchanger duct (12).

20. The assembly according to any one of the preceding claims, **characterised in that** the intake manifold (10) and the outlet manifold (16) are made of deep-drawn or cold-extruded sheet steel.

21. The assembly according to any one of the preceding claims, **characterised in that** the intake manifold (10) and the outlet manifold (16) are identical.

22. The assembly according to any one of the preceding claims, **characterised in that** the bypass duct (14) and the heat exchanger duct (12) extend in a straight line.

## Revendications

1. Ensemble de construction, composé d'un échangeur de chaleur des gaz d'échappement et d'une dérivation avec un coude d'entrée (10), un coude de sortie (16), un canal (12) pour un échangeur de chaleur (38) et un canal de dérivation (14), le canal d'échangeur de chaleur (12) et le canal de dérivation (14) s'étendant, branchés en parallèle, entre le coude d'entrée (10) et le coude de sortie (16) et étant relié à celui-ci de façon étanche aux écoulements, tandis qu'à l'intérieur du canal d'échangeur de chaleur (12) est disposé un échangeur de chaleur (38), **caractérisé en ce que** la face d'entrée de l'échangeur de chaleur est reliée, de façon étanche aux écoulements, au canal d'échangeur de chaleur (12) et la face de sortie de l'échangeur de chaleur (38) est logée de façon déplaçable dans le canal d'échangeur de chaleur (12), de manière qu'une dilatation thermique de l'échangeur de chaleur (38) par rapport au canal d'échangeur de chaleur (12) soit possible.

2. Ensemble de construction selon la revendication 1, **caractérisé en ce qu'**entre le coude de sortie (16), d'une part, et le canal d'échangeur de chaleur (12) et le canal de dérivation (14), d'autre part, est disposé un adaptateur de sortie (28).

3. Ensemble de construction selon la revendication 2, **caractérisé en ce** l'adaptateur de sortie (28) est formé d'une tôle d'acier travaillée par étirage profond.

4. Ensemble de construction selon la revendication 3, **caractérisé en ce** l'adaptateur de sortie (28) est soudé au coude de sortie (16).

5. Ensemble de construction selon l'une des revendications précédentes, **caractérisé en ce qu'**entre le coude d'entrée (10), d'une part, et le canal d'échangeur de chaleur (12) et le canal de dérivation (14), d'autre part, est disposé un adaptateur d'entrée (18).

6. Ensemble de construction selon la revendication 5, **caractérisé en ce que** l'adaptateur d'entrée (18) est une pièce métallique moulée.

7. Ensemble de construction selon la revendication 6, **caractérisé en ce que** l'adaptateur d'entrée (18) est soudé au coude d'entrée (10).

8. Ensemble de construction selon l'une des revendications 5 à 7, **caractérisé en ce que**, dans l'adaptateur d'entrée (18), est monté à pivotement un clapet de valve (22), l'adaptateur d'entrée (18) présentant deux sièges de clapet (20), avec lesquels coopère le clapet de valve (22) et qui sont associés au canal d'échangeur de chaleur (12), respectivement au canal de dérivation (14).

9. Ensemble de construction selon l'une des revendications précédentes, **caractérisé en ce que** le canal d'échangeur de chaleur (12) est formé d'un cône d'entrée (30), d'un tube d'échange de chaleur (34) et d'un cône de sortie (32), le tube d'échangeur de chaleur (34) étant relié, de façon étanche aux écoulements, au cône d'entrée (30) et au cône de sortie (32).

10. Ensemble de construction selon la revendication 9, **caractérisé en ce que** le tube d'échangeur de chaleur (34) est soudé au cône d'entrée (30) et au cône de sortie (32).

11. Ensemble de construction selon la revendication 9 ou selon la revendication 10, **caractérisé en ce que** la face d'entrée de l'échangeur de chaleur (38) est soudée au cône d'entrée (30).

12. Ensemble de construction selon l'une des revendications 9 à 11, **caractérisé en ce que** la face de sortie de l'échangeur de chaleur (38) est logée de façon déplaçable dans le cône de sortie (32).

13. Ensemble de construction selon la revendication 12, **caractérisé en ce que**, entre le cône de sortie (32) et la face de sortie de l'échangeur de chaleur (38), existe un jeu radial de l'ordre de grandeur de 0,2 mm.

14. Ensemble de construction selon l'une des revendications 9 à 13, **caractérisé en ce que** l'échangeur de chaleur (38) présente deux tubulures de raccordement (42), **en ce que** le tube d'échangeur de chaleur (34) présente deux trous (44) à travers lesquels s'étendent les tubulures de raccordement (42).

15. Ensemble de construction selon la revendication 14, **caractérisé en ce que** les trous sont des trous oblongs (44).

16. Ensemble de construction selon l'une des revendications 9 à 15, **caractérisé en ce qu'**entre la face extérieure de l'échangeur de chaleur (38) et la face intérieure du tube d'échangeur de chaleur (34) est prévu un intervalle annulaire (46), dans lequel est disposée une natte (48) isolant de la chaleur.

17. Ensemble de construction selon la revendication 16, **caractérisé en ce que** la natte (48) isolant de la chaleur est formée d'un matériau fibreux.

18. Ensemble de construction selon l'une des revendications 16 et 17, **caractérisé en ce que** la natte (48) isolant de la chaleur est comprimée entre le tube d'échangeur de chaleur (34) et l'échangeur de chaleur (38), de manière qu'elle forme une étanchéité, empêchant tout écoulement de fuite de la face de sortie de l'échangeur de chaleur (38) dans l'intervalle annulaire (46).

19. Ensemble de construction selon l'une des revendications précédentes, **caractérisé en ce qu'**entre la face de sortie de l'échangeur de chaleur (38) et le canal d'échangeur de chaleur (18) est disposé un joint d'étanchéité (50).

20. Ensemble de construction selon l'une des revendications précédentes, **caractérisé en ce que** le coude d'entrée (10) et le coude de sortie (16) sont formés d'une tôle d'acier travaillée par étirage profond ou par extrusion.

21. Ensemble de construction selon l'une des revendications précédentes, **caractérisé en ce que** le coude d'entrée (10) et le coude de sortie (16) sont identiques.

22. Ensemble de construction selon l'une des revendications précédentes, **caractérisé en ce que** le canal de dérivation (14) et le canal d'échangeur de chaleur (12) s'étendent suivant un tracé rectiligne.
